Europäisches Patentamt

European Patent Office

Office européen des brevets

(19)

(11) Publication number: **0 323 167**

**A2**

(12) **EUROPEAN PATENT APPLICATION**

(21) Application number: 88312243.4

(22) Date of filing: 22.12.88

(51) Int. Cl.4: **G11B 7/00 , G11B 11/10**

(30) Priority: 29.12.87 US 138860

(43) Date of publication of application:
05.07.89 Bulletin 89/27

(84) Designated Contracting States:
DE FR GB NL

(71) Applicant: **MINNESOTA MINING AND MANUFACTURING COMPANY**
3M Center, P.O. Box 33427
St. Paul, Minnesota 55133-3427(US)

(72) Inventor: **Vogelgesang, Peter J. c/o Minnesota Mining and**
**Manufacturing Company 2501 Hudson Road**
**St. Paul Minnesota 55144-1000(US)**
Inventor: **Wirth, Wayne M. c/o Minnesota Mining and**
**Manufacturing Company 2501 Hudson Road**
**St. Paul Minnesota 55144-1000(US)**

(74) Representative: **Baillie, Iain Cameron et al**
**c/o Ladas & Parry Isartorplatz 5**
**D-8000 München 2(DE)**

(54) **Helical scan tape record apparatus and method.**

(57) An apparatus for reading and recording information on an optical tape has the tape wound and advanced along a helical path on the outer cylindrical surface of the drum. A laser optical system for writing and reading information on the tape is positioned entirely on the outside of the drum and is stationary relative to the rotation of the drum and movement of the tape thereon. Tape is supplied to the helical path on the drum by one or more tape reels rotatably mounted within the drum and aligned coaxially with the rotational axis of the drum. The drum and tape thereon are rotated at a high rate relative to the stationary optical system, and the tape is advanced along the helical path at a relative slow rate. The drum and tape thereon are configured in the form of a cartridge, removeable as a unit from the optical system.

Fig. 1

## HELICAL SCAN TAPE RECORD APPARATUS AND METHOD

### BACKGROUND OF THE INVENTION

#### 1. Field of the Invention.

The present invention relates to helical scanning tape recording methods and apparatus therefor.

#### 2. Description of the Prior Art.

A helical scan approach to magnetic recording is now used universally in the videotape recording industry, and the same approach has also been used for high data rate digital recorders. In a typical helical scan recorder for video tape, the recording tape is taken from supply reel, guided onto a rotating head wheel, wrapped partially around the head wheel, and then guided off the head wheel onto a take-up reel. Commonly, the supply and take-up reels are mounted and supported in a form known as a video tape cassette. The path of the tape as wrapped around the head wheel is skewed, thus following a helical path on the periphery of the head wheel (giving rise to the term of art "helical scan"). A magnetic head protruding slightly from the head wheel and rotating with the head wheel engages the magnetic tape along a diagonal path on the tape from edge to edge and along a length of the tape equal approximately to the amount of wrap of the tape on the head wheel. For each pass of the magnetic head across the tape (as the head wheel rotates) relative to the tape, the tape advances slightly along the helical path so that each subsequent diagonal path on the tape traced by the magnetic head lies adjacent to the previous diagonal path. A significant advantage realized by helical recording techniques is the attainment of a head-to-tape speed of hundreds of inches per second, allowing very high frequencies to be recorded. Another advantage of a helical scan system is to allow long uninterrupted lines ("tracks") of information relative to the width of the tape while at the same time maximizing the area of the tape covered with recording tracks.

Recent developments in information storage technology have resulted in a variety of techniques of recording and reading information by optical or magneto-optic means. At present, optical recording technology is being utilized in the consumer market for distribution of pre-recorded television programming (optical video disk) and pre-recorded high fidelity sound (compact disk). These applications are demonstrating the reliability of optical recording techniques. In addition, applications are emerging for the write-once optical disks by commercial and industrial users for storage of digital data, including the storage of digitized images. Commercial introduction of erasable media, such as magneto-optic disks, will further enhance the utilization of optical recording systems and will make possible the storage of large numbers of digitized images within relatively small disk drives.

The principal virtues of optical disk recording are high storage density (approximately $2 \times 10^8$ bits per square inch), high speed random access to large data stores, and a non-contact (i.e., non-wearing) machine-media interface which is mechanically forgiving. These virtues translate to digitized image storage capabilities which combine high capacity, small size, and low cost.

While optical disk recording provides unprecedented storage density and access to data, the surface area of a disk is limited by the constraint of a convenient and manageable disk diameter. Combinations of multiple disks in a "juke box" format circumvents this constraint to a certain extent, but is an expensive solution to the problem.

Optical recording on a tape medium, on the other hand, provides a much greater surface area than on a manageable disk, since the area of a tape is limited only by the size of the reel on which it is wound. Of course, use of a tape for data storage provides serial access to the data and may be limited to applications in which access time is not important or where the data is always handled in continuous, real time data streams. Numerous applications exist for this kind of data handling, including long-term data storage and back-up for disks. Digitized visual images generally generate continuous data streams because digital values are generated from analog image scanning devices.

Attempts have been made to combine the advantages of helical scanning with optical tape. In such arrangements, the tape follows a helical path around a head wheel, with the rotating magnetic head of a helical magnetic scanner replaced by rotating some or all optical components of a laser-driven optical scanning system. The head wheel, containing certain optical components, has in it a transparent window or opening to allow the laser beam to reach the tape from within the head wheel. Examples of such schemes are seen in Bell et al. U.S. Patent 4,661,941, Hudson U.S. Patent 4,633,455 and Higashiyama U.S. Patent 4.525.828.

These patents show optical tape recording systems in which the beam from an external laser is projected into the interior of a head wheel along the axis of rotation of the head wheel with an assortment of mirrors, beam-splitters and the like, some of which rotate with the head wheel to produce the necessary optical scan. As illustrated by the complex optical arrangements shown in these patents, rotating optics are not easily implemented. In addition, since the read/write laser beam reaches the tape from inside the head wheel, the data borne on the tape must be accessed through or read off of that side of the tape which contacts the surface of the rotating head wheel, which has a surface velocity greatly in excess of the surface velocity of the tape. The surface of the tape in contact with the head wheel, which is usually the critical surface of the tape for information transfer purposes, is thus subject to possible damage and data loss through contact with the high speed head wheel.

## SUMMARY OF THE INVENTION

The present invention provides an apparatus and method for reading and recording on optical tape. The apparatus of the present invention includes a drum with tape helically wound around the outside of the drum. Data detecting means are provided for scanning an outer side of the tape which is wound on the drum, and the drum and tape wound thereon are rotated past the data detecting means. In a preferred embodiment, the present invention employs optical tape and the data detecting means is a read/write laser optical system which projects a laser beam at the tape wound around the drum. The optical components of the read/write optical system are external to and fixed in position relative to the rotating drum and tape. When optical tape is magneto-optic tape, the optical system includes means for creating a magnetic field congruent with that area of the magneto-optic tape where the laser beam is focused. Because the magnetic field creating means cannot be located behind the tape on the rotating drum, and must permit the laser beam to be directed therethrough, it is mounted adjacent to the cylindrical outer surface of the tape drum and has an optical aperture therein for permitting passage of the laser beam from the read/write optical system to the tape. An inherent feature in the design of the apparatus of the present invention is that the information bearing surface of the tape is on the side of the tape not in contact with the outer cylindrical surface of the rotating drum.

In a preferred embodiment, tape is supplied from within the rotating drum itself, where a tape supply includes a tape supply reel and tape take-up reel, both of which are rotatably mounted relative to the drum, and preferably coaxially with the rotational axis of the drum. In another embodiment of the apparatus of the present invention, the tape is formed as an endless loop of tape, supplied from a single pack of coiled tape within the drum. Preferably, the coiled pack of tape is positioned coaxially with the rotatable axis of the drum. In both of these embodiments, the drum is provided with means for advancing the tape along a helical path defined on the outer cylindrical surface of the drum. Preferably, the drum, tape wound thereon, tape supply and related tape handling components mounted on the drum comprise a tape drum assembly which as a unit is disengageable from the means for rotating the drum and interchangeable with other similar tape drum assemblies for rapid and simple replacement of the tape in relation to the data detecting means.

The method of the present invention for retrieving information from an optical tape includes the steps of aligning the tape in helical path about an axis, rotating the tape about that axis and focusing a beam of radiant energy on a side of the tape opposite the axis to detect information thereon as the tape is rotated. For writing on the tape, the method includes the step of recording information on the side of the tape opposite the axis as the tape is rotated. When the tape is magneto-optic tape and the beam of radiant energy is a laser beam, the method for recording purposes includes the additional step of creating a magnetic field congruent to that area of the tape upon which the laser beam is focused. Other steps in preferred embodiments of the inventive method include advancing the tape along the helical path as the tape is rotated, and supplying tape to the helical path from a tape supply within the helical path.

## BRIEF DESCRIPTION OF THE DRAWINGS

FIG. 1 (Sheet 1) is a schematic isometric representation of the present invention illustrating an optically readable tape mounted in a helical path on a rotatable drum and a non-rotating read/write optical assembly positioned external to the drum.

FIG. 2 (Sheet 2) is a schematic top view of the rotatable drum of the present invention showing the tape path originating and terminating in concentrically mounted supply and rewind reels.

FIG. 3 (Sheet 3) is a cross-sectional view as taken along the line 3-3 in FIG. 2.

FIG. 4 (Sheet 2) is an enlarged, schematic top view illustrating the photosensitive means for monitoring tape tension in the present invention.

FIG. 5 (Sheet 4) is a representative illustration of the embodiment of the present invention seen in FIG. 1, showing portions of the tape and drum adjacent that area on the drum where the tape enters and exits the helical path on the drum.

FIG. 6 (Sheet 4) is a schematic representation of a further embodiment of the invention of the present application, wherein two laser beams are focused on a rotating drum.

FIG. 7 (Sheet 4) is a schematic illustration showing multiple laser beams in connection with the helical scanning arrangement of the present invention.

FIG. 8 (Sheet 5) is a schematic isometric representation of an embodiment of the present invention wherein the rotating drum is housed within a cartridge.

FIG. 9 (Sheet 5) is a schematic pictorial view of a further embodiment of the present invention employing an endless loop of tape.

## DETAILED DESCRIPTION OF THE PREFERRED EMBODIMENTS

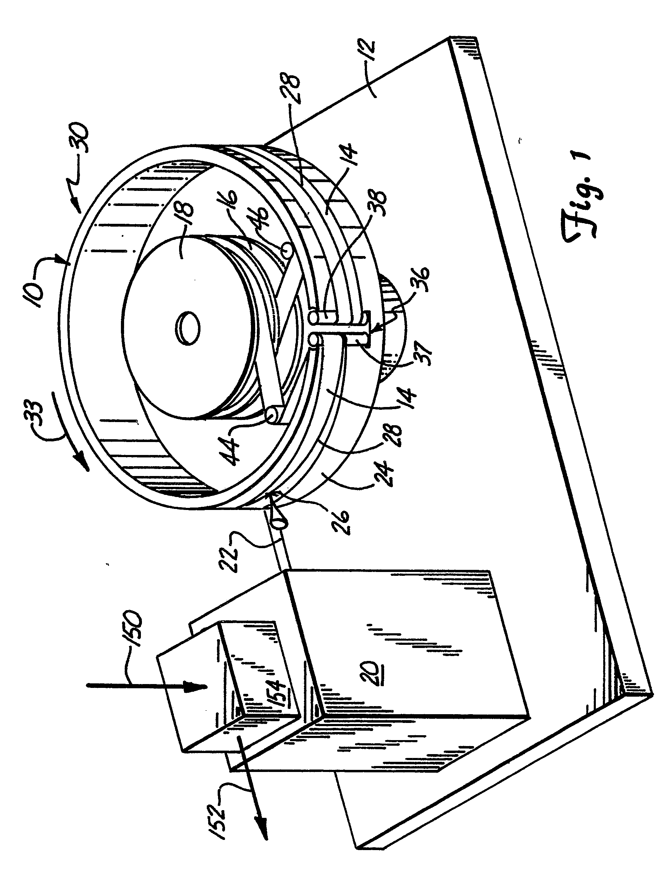

As seen in FIG. 1, a tape drum 10 is rotatably mounted with respect to a base 12. A tape record medium 14 is wrapped in a helical path around the outside of the tape drum 10. Tape supply and take-up reels 16 and 18, respectively, are contained inside the tape drum 10. Preferably, the reels 16 and 18 are rotatable with respect to the tape drum 10 and coaxially aligned with each other, and also with the rotational axis of the tape drum 10.

The tape record medium 14 is "optical tape". Such tape consists of a ribbon of substrate material capable of providing a suitably smooth optical surface. The substrate may be reactive to laser light, or the substrate may be coated with a second substance or may have additional layers which are reactive to light. This reaction is employed during the tape recording operation. The effect of the reaction or some other pre-recorded condition of the tape is sensed during tape playback by some characteristic of reflected or transmitted light (e.g., the magnitude, color (wavelength), phase or polarization of light). It is contemplated that the present invention will function with any kind of tape capable of interacting with a focused beam of radiant energy.

As seen in FIG. 1, the present invention includes a tape reading/writing assembly 20, external of the tape drum 10 and fixed with respect to base 12. For reading and writing on optical tape, the read/write assembly 20 generates, in a conventional manner, a laser beam 22, which is directed to focus on an outer cylindrical surface 24 of the tape drum 10 at point 26, and the beam 22 is essentially perpendicular to the cylindrical outer surface 24 of the tape drum 10 at that point.

As the tape drum 10 is rotated relative to base 12 and read/write assembly 20, the point 26 traces a circular path 28 on the cylindrical outer surface 24 of the tape drum 10. However, because the tape 14 follows a helical path about the tape drum 10, the point 26 traces a diagonal path on the tape 14 (i.e., helical scanning of the tape).

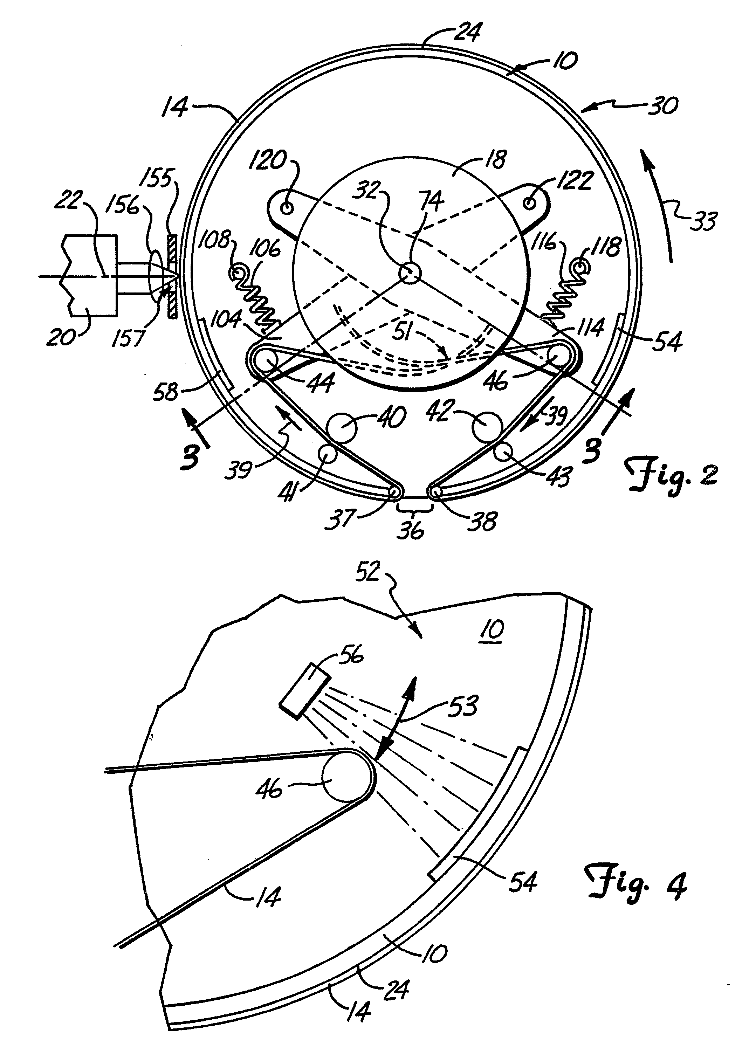

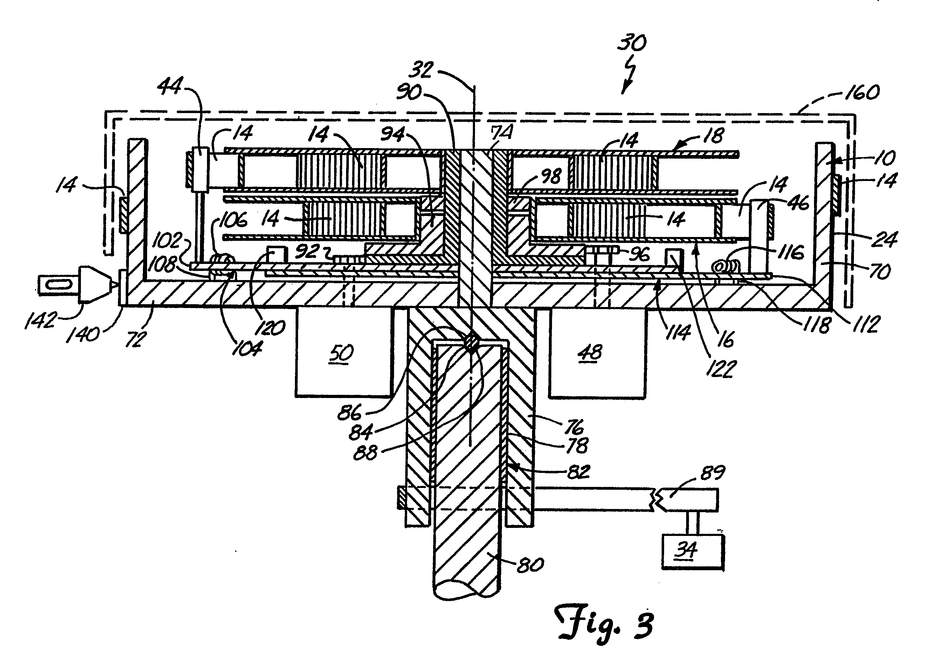

FIG. 2 is a top view schematic representation of the tape drum 10 of FIG. 1, showing the tape path and other elements that relate to tape handling. A tape drum assembly 30 which carries the optically readable tape is located adjacent to the read/write assembly 20 which contains the optical elements necessary to read or write information on the tape 14. The tape drum assembly 30 rotates at a generally fixed speed around its axis of rotation 32, being driven by a motor 34 (FIG. 3) in direction indicated by arrow 33. No components of the read/write assembly 20 rotate with the drum assembly 30 in order to record on or retrieve data from the tape 14. The tape 14, capable of carrying information, not only extends around the outer periphery of the tape drum 10 (on its cylindrical outer surface 24) but also extends into the interior of tape drum 10 through an opening or slot 36 therein. The opening 36 is a cutout in the tape drum 10, creating a gap in its cylindrical outer surface 24, and is provided to permit passage of the tape 14 between the helical path and the tape supply reel 16 and tape take-up reel 18 rotably mounted on the tape drum 10.

Roller guides 37 and 38 are provided at the edges of the opening 36 in the tape drum 10 in order to reduce friction and avoid damage to the tape 14 as it enters and exits the tape drum 10 and helical path thereon. The roller guides 37 and 38 are preferably rotatably mounted with respect to the tape drum 10.

As the tape drum assembly 30 rotates relative to the read/write assembly 20, the tape 14 is advanced relative to the cylindrical outer surface 24 of the tape drum 10, in direction indicated by arrows 33 and 39 (FIG. 2). Within the tape drum 10, along that portion of the tape path between opening 36 and supply reel 16, the tape 14 passes between a tape advance capstan 40 and associated pinch roller 41. When a tape advance relative to the tape drum 10 is desired, the advance capstan 40 is rotatably driven by a motor in the conventional manner to advance the tape 14 along about the helical path on the tape drum 10 and to - and from the supply and take-up reels 16 and 18.

A tape rewind capstan 42 and associated pinch roller 43 are also provided on the tape path within the tape drum 10. along that portion of the tape path between opening 36 and take-up reel 18. The tape rewind capstan 42 is driven by its own motor or by mechanical connection to the drive motor for the tape advance capstan 40, and provides one means for reversing the direction of tape advance (in direction opposite to that of arrows 33 and 39).

Spring-loaded dancer rollers 44 and 46 provide the tension required to keep the tape 14 in intimate contact with the outer cylindrical surface 24 of the tape drum 10. As seen in FIG. 2, dancer roller 44 defines the tape path between the take-up reel 18 and advance capstan 40. while dancer roller 46 defines the tape path between the supply reel 16 and rewind capstan 42. Preferably, the dancer rollers 44 and 46 and other tape handling components (e.g., capstans 40 and 41, pinch rollers 42 and 43 and roller guides 37 and 38) are tilted slightly off of perpendicular (relative to the tape path from the reels) to provide smooth transitions for the tape 14 between the reels 16 and 18 and the helical path on the outer cylindrical surface 24 of the tape drum 10.

The supply reel 16 is rotatably driven by a motor 48, and the take-up reel 18 is rotatably driven by a motor 50 (FIG. 3). Separate motors are provided for the supply and take-up reels, since the rotational speeds of the supply and take-up reels will vary depending on how much tape exists on each. Because of the criss-cross overlapping (as at 51 in FIG. 2) of tape 14 within the tape drum 10, the supply and take-up reels both rotate in the same direction.

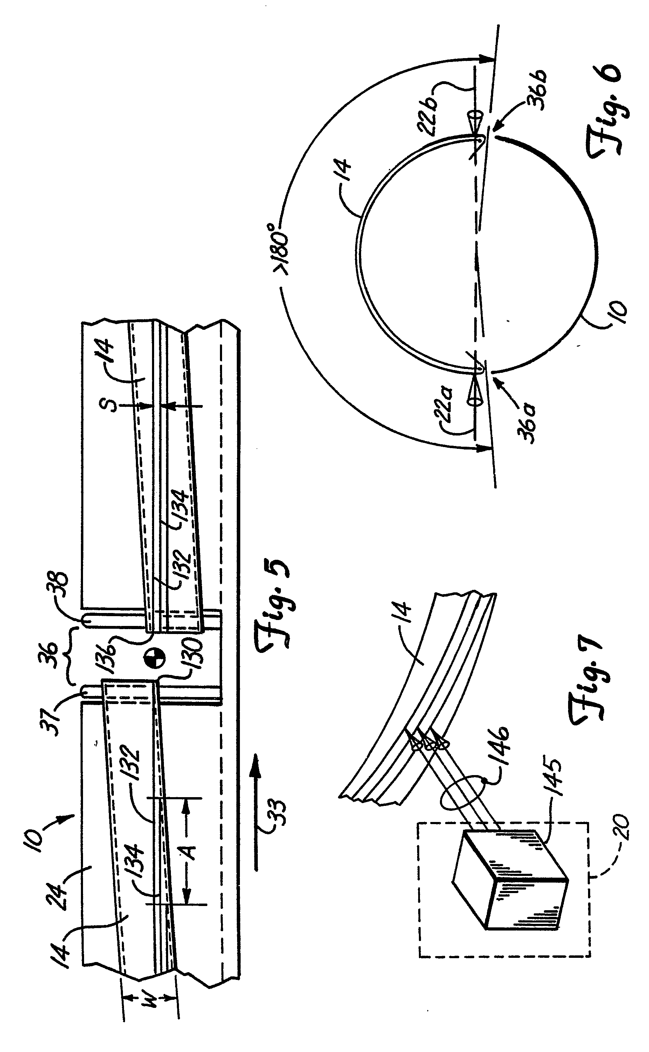

Tape tension sensor assemblies 52 adjust the speeds of the motors 48 and 50 as circumstances warrant. FIG. 4 schematically illustrates the operation of the tension sensor assembly 52 on the supply side dancer roller 46. The dancer roller 46 is mounted on a pivotal arm for movement in direction illustrated by arrows 53. A photosensor 54 is mounted on the inside wall of tape drum 10. A suitably chosen light source 56 is positioned between the photosensor 54 and the supply reel 16 such that the dancer roller 46 with the tape 14 looped over it passes between the photo sensor 54 and light source 56. If the supply reel 16 is rotating too slowly, the dancer roller 46 moves so as to increase the amount of light reaching the photosensor 54, causing the photosensor 54 to provide a signal to the supply reel motor 48 to increase its speed. When the supply motor reel is running slightly faster than needed, the dancer roller 46 moves so as to block light reaching the photosensor 54, and this then causes the photosensor 54 to provide a signal to the supply reel motor 48 to slow down, thereby permitting the spring-loaded dancer roller 46 to be biased to the other direction. In a similar system on the take-up side, an increase of light striking a photosensor will be detected which in turn generates a signal to the take-up reel motor 50 to slow down. while a decrease in light striking that photosensor will cause the take-up reel motor 50 to speed up.

As seen in FIG. 3, tape drum 10 has a cylindrical wall 70 supported on a disk-shaped plate 72. Affixed to the center of the plate 72 is a cylindrical center post 74 which extends upwardly from the plate 72 on the same side of the plate as the cylindrical wall 70 (the post 74 is within the tape drum 10). The center post 74 extends through the plate 72 and has an outer cylindrical portion 76 extending downwardly from the plate 72 (outside the tape drum 10). The center post 74 and outer portion 76 thereof are coaxially aligned with the rotational axis 32 of the tape drum 10.

The outer portion 76 is open at its outer end and has a bore 78 extending from that open end toward the plate 72, with the bore 78 defining the drum axis 32. A mounting post 80 is receivable axially within the bore 78. A precision sleeve bearing 82 is fitted between the mounting post 80 and inner cylindrical surface of bore 78, with the length of bearing 82 being sufficient to limit wobbling of the outer portion 76 and tape drum 10 borne thereon during rotation of the tape drum 10 relative to the mounting post 80. The mounting post 80 is, in turn, fixedly mounted to the base 12 (not shown in FIG. 3). A thrust bearing 84 is secured in centering pits 86 and 88 on the outer portion 76 and mounting post 80, respectively, in order to support the weight of the drum assembly 30 on the mounting post 80.

In a preferred embodiment, a drive belt 89 operably connects the outer portion 76 and tape drum 10 borne thereon to drum drive motor 34. Slip rings and brushes (not shown) are mounted on and relative to the outer portion 76 in order to provide electrical contact to the rotating drum assembly 30 as necessary for the motors and sensors which are carried on and rotate with the drum assembly 30.

Referring again to FIG. 3, the take-up reel 18 is supported within the tape drum 10 on a take-up reel hub 90 which is rotatable with respect to the center post 74. The take-up reel hub 90 and take-up reel 18 supported thereon are rotatably driven by operable engagement of the take-up reel hub 90 and a gear 92, which in turn is rotated by take-up reel motor 50. Similarly, the supply reel 16 is supported upon a supply reel hub 94 for rotation about center post 74 and take-up reel hub 90. The supply reel hub 94 and supply reel 16 supported thereon are rotatably driven by operable engagement of the supply reel hub 94 and a gear 96, which in turn is rotated by supply reel motor 48. The take-up reel 18 is axially supported and separated from the supply reel 16 by annular collar 98. The gears 92 and 96 and motors 48 and 50 are all supported on the plate 72 on the tape drum 10. Spacers and bearings are provided as needed or appropriate between the relative rotating components about the center post 74. Not shown in FIG. 3 are advance capstan 40 and its associated pinch roller 41, rewind capstan 42 and its associated pinch roller 43, and the capstan drive motor(s), all of which are also supported on the plate 72 of the tape drum 10.

The dancer rollers 44 and 46 are mounted on dancer roller support arms positioned rotatably within the tape drum 10 about the center post 74 and between the take-up reel hub 90 and plate 72. Dancer roller 44 is rotatably mounted upon a first end 102 of roller arm 104, which is biased away from the opening 36 in the tape drum 10 by a coiled spring 106. One end of the spring 106 is secured to the first end 102 of the roller arm 104, while the second end thereof is secured to a post 108 extending upwardly from the plate 72 of the drum 10. Similarly, dancer roller 46 is rotatably mounted on a first end 112 of roller arm 114. Again, the dancer roller 46 is biased away from the opening 36 in the tape drum 10 by a coiled spring 116, one end of which is secured to the first end 112 of the roller arm 114, and the second end of which is fixed to a post 118 extending upwardly from the plate 72 of the tape drum 10. In the embodiment shown in FIGS. 2 and 3, each roller arm has a second end which extends past the circumference of the supply roller 16 and which has means for bearing suitable counterbalance weights 120 and 122. These weights are provided to counteract the centrifugal forces exerted on the roller arms 104 and 114 when the tape drum 10 is rotated.

As seen in FIG. 5, the starting point 130 for a given diagonal track 132 on the tape 14 for reading or recording on that track is on the tape drum 10 adjacent to opening 36 therein where the tape 14 emerges from inside the tape drum 10. Each track on the tape 14 (such as track 132) corresponds to the path 28 traced by the laser beam 22. During each rotation of the tape drum 10, the tape 14 moves slightly (in direction of arrow 33) relative to the surface 24 of the tape drum 10 as a consequence of operation of the advance capstan 40. Then, on the next rotation of the tape drum 10, the path 28 traced by the laser beam 22 covers a new track 134, adjacent to the previous track 132, and will cover all subsequent tracks as long as the tape 14 continues to move relative to the tape drum 10 as the tape drum 10 is rotated. The amount of offset between adjacent tracks along the length of the tape 14 is a function of tape velocity relative to the tape drum 10.

Since the laser beam 22 impinges upon the tape 14 from outside the tape drum 10, the information bearing surface of the tape 14 is on that side of the tape 14 which is not in contact with a surface of the tape drum 10. The amount of tape advance per drum revolution is approximated by the formula $A = (S * C (W * 25400)$, which is reasonably accurate when the ratio of tape width to drum circumference is greater than 1:20, where A is the linear advance of the tape, in inches, S is the desired separation between adjacent paths, in microns, C is the circumference of the cylindrical outer surface of the tape drum minus the length of the opening therein, in inches, and W is the width of the area of the tape to be recorded, in inches. In one embodiment of the present invention, where S = 2 microns, C = 34.28 inches, and W = 0.46 inches (0.5 inch wide tape with 0.02 inch wide borders), the tape advance A would be about 0.006 inches per revolution of the tape drum. If the drum makes one revolution in 0.1 seconds, then the relative velocity of the tape with respect to the surface of the drum becomes $(0.006)/(0.1)$, or 0.06 inches per second. The tape drum 10 is rotated at a very high rate of rotation relative to the stationary optical read/write assembly 20 (e.g., 900 rpm in a preferred embodiment). To appreciate the advantage of the present invention, it must be remembered that in the prior art optical tape recorders where the optics were located within a rotating drum, the relative velocity of tape to drum was often greater than 34 inches per second, whereas the present invention provides a differential velocity between the tape and drum surface measured in fractions of an inch per second. The present invention thus provides significant improvements in tape handling techniques and integrity.

The helical wrap angle of the tape 14 on the cylindrical outer surface 24 of the tape drum 10 is preferably chosen to allow a slight overlap of the tape 14 if the tape were to be wrapped on the tape drum 10 for 360 degrees or more. As seen in FIG. 5, this overlap would occur but for the opening 36 in the tape drum 10. This overlap allows the laser beam 22 to first impinge upon the tape 14, for example, at a point spaced in from a lower edge of the tape 14 (at track starting point 130) and to thus trace a path (track 132) from that point diagonally across the tape 14. The track 132 ends at a point spaced in from an upper edge of the tape 14 adjacent the location at which the tape 14 first emerges from the interior of the tape drum 10 (track ending point 136). Restated, the total tape "overlap" is equivalent to the sum of the widths of the two unused edges of the tape 14, with the laser beam 22 vertically located at a position bisecting the "overlap."

In the embodiment of the present invention as seen in FIGS. 1-3, the tape 14 is unloaded from the tape supply reel 16, follows the helical path on the outer cylindrical surface 24 of the tape drum 10, and is loaded onto the take-up reel 18 as recording or playback proceeds. During this process (and also during tape rewinding), the tape packs wound on the reels remain concentric with the rotational axis 32 of the tape drum 10, and also the rotational axes of the reels. Thus, tape shuttling between supply and take-up reels does not unbalance the rotating tape drum 10 since the tape mass about the drum's rotational axis remains nearly constant. Because of the coaxial mounting of the tape drum 10, supply reel 16 and take-up reel 18, a dynamic balancing of the drum assembly 30 is achieved. It is not essential that the supply and take-up reels be coaxially mounted with the tape drum 10, however, counterbalancing may be required if such a coaxial arrangement is not provided.

As stated, the read/write assembly 20 generates a focused laser beam 22 in a conventional manner. The requirements for such an optical system are well-known to those skilled in the art, and one arrangement may be preferred over another depending upon the characteristics of the information carrying surface of the tape 14 and other variables. An optical system designed to handle optical disks will function satisfactorily with optical tape with some minor modifications. Such an optical system is impartial insofar as the format of the surface it illuminates, but the focus and tracking detectors and servos must be reoriented in order to use an optical system designed for disks in connection with optical tape. In the case of optical tape, bearing radial runout produces a focus error and axial runout produces a tracking error, which is opposite of the disk case. For optical tape purposes, the final focusing lens for the laser beam moves radially for focus and axially for tracking purposes when a two-axis optical head is used.

In general terms, the optical read/write system 20 is provided with recording signals 150 from some data source, and those signals are transmitted to the recording medium (tape 14) via the laser beam 22. The reactive surface of the tape 14 is altered in state by the laser beam 22 to record the data on the tape 14. In a playback mode, the optical read/write assembly 20 focuses a laser beam 22 of lesser power on the reactive surface of the tape 14 to detect the changes in state previously written on the reactive surface. The information detected is then amplified and converted into playback signals 152.

In order to accurately monitor the position of the tape drum 10 as it rotates relative to the fixed optical read/write assembly 20, a tape drum position indicator 140 is mounted on the tape drum 10. As the tape drum 10 rotates, the indicator 140 is detected or read by a suitable sensor 142 mounted or supported exterior to the tape drum 10. The sensor 142 provides an appropriate signal, upon detection of the indicator 140, to indicate to the optical read/write system 20 when the start of recording or reading on a new track is permissable (e.g., when the opening 36 in the tape drum 10 is not passing by the laser beam 22).

In the embodiment of the present invention as seen in FIGS. 1-3, the tape path configuration requires that the helical path around the tape drum 10 be less than 360 degrees. The small opening 36 which exists at the points of entry and exit of the tape 14 through the tape drum 10 produces a momentary signal loss to the read/write assembly 20 as the opening 36 rotates past the laser beam 22. This situation exists in other types of helical scan recorders (for example, in the "C format" video recorders used in the broadcast industry) and is typically handled by buffering data electronically through the opening data gap interval in order to place a continuous track on the tape for subsequent tracking during playback. The conventional approach to dealing with this tape drum opening is to include a FIFO (first-in-first-out) register 154 (see FIG. 1) in the optical read/write assembly 20 for time compression of data during recording. The FIFO register 154 manipulates a data stream of recording and playback signals provided to or received from the optical read/write system 20. A steady but accelerated data stream is recorded during the active portion of drum rotation, and recording is interrupted during the opening interval. The average date rate of the system matches the real time rate of the date source. The process is usually reversed during playback to restore the data rate to the average value and to fill in the data gap caused by the physical opening in the tape drum.

An alternative method to handle the data stream gap in optical recording is illustrated by the embodiment of the invention seen in FIG. 6. In this case, the tape drum 10 has at least two openings therein, 36a and 36b. In this case, two laser beams are focused to impinge upon the tape 14 wound helically about the drum 10, the laser beams being illustrated in FIG. 6 as at 22a and 22b. In one embodiment, laser beams 22a and 22b are colinear, and located 180 degrees apart about the periphery of the tape drum 10. As before, the tape 14 is supplied from within the tape drum 10 via suitable tape supply means. The helical path on the outer cylindrical surface of the tape drum 10 is defined between the openings 36a and 36b, and is slightly greater than 180 degrees (preferably 182 degrees) about the perimeter of the tape drum 10, as seen in FIG. 6. As the tape drum 10 and tape 14 borne thereon rotate, the fixed position laser beams 22a and 22b and optical assemblies associated therewith read or write continuously, so that when the tape 14 passes from one laser beam to the other, a short interval of data duplication is detected from or written on that portion of the tape length which exceeds 180 degrees.

This helical scanning technique is known, and has been employed in the VHS and Beta format consumer video recorders. During playback, a short interval will exist for each rotation of the tape drum 10 where signals will be coming from both laser beams 22a and 22b (when the drum 10 is positioned as seen in FIG. 6). The output from the optical assemblies of the recorder is switched from tracking one laser beam to the other in the middle of this interval, providing a continuous data stream out of the recorder. While FIG. 6 shows this technique for handling the gap in tape about the periphery of the tape drum using two laser beams, the same technique can be used for additional multiple laser beam arrangements. In such cases, the arc defined by the helical path around the cylindrical outer surface of the tape drum must be greater in degrees than the largest arc between adjacent laser beams. Since optical assemblies are relatively expensive and electronic buffering means (e.g., FIFO registers) are not, the near-360 degree tape wrap will generally be preferred because it results in a least expensive configuration and also one which is typically smaller.

As described above, the present invention reads or writes data in a single track on the tape 14. One limitation in a single track system is that data transfer rates are limited by the velocity that can be achieved between the recording medium surface and the energy source that is doing the recording or reading. Medium to transducer (laser beam) velocities greater than 1000 inches per second have been difficult to obtain. In recorder system configurations where multiple transducers are rotating and are recording several tracks simultaneously, physical alignment of the transducers to maintain track spacing is difficult. In addition, electrical connections to multiple transducers in such arrangements requires complex brush and ring assemblies or rotating transformer assemblies. A simple means for alleviating these difficulties is by using laser diode arrays focused on the tape instead of a single laser beam. Such arrays illuminate more than one track at a time for reading and writing purposes.

As seen schematically in FIG. 7, the optical read write assembly 20 includes a laser diode array 145 which, in connection with a focusing lens 146, impinges a plurality (three are shown) of laser beams onto the outer reactive surface of tape 14.

As seen, each of the three laser beams illuminates a separate track on the tape 14, thus increasing the data transfer rate between the tape and the optical read/write assembly 20 threefold. Because the present invention employs stationary optics relative to the rotating drum 10, the use of laser diode arrays adds no mechanical complexity to the system, as opposed to systems employing rotating optics.

As mentioned above, one tape medium suited for use with the present invention is magneto-optic tape. Magneto-optic recording requires a tracking detector which can develop a playback signal not from physical features, but from magnetically recorded features which influence the polarization of reflected light. When using optical tape of the type commonly referred to as magneto-optic tape, a weak (approximately 300 Oe) magnetic field must be supplied perpendicular to the tape surface and congruent with the point or area where the laser beam is focused in order to control the polarity of magnetization of the tape during writing and erasure of information on the tape.

In magneto-optic disk systems, the magnetic field is ordinarily applied from the pole of an electromagnet behind the disk. The magnetic field through the electromagnet is reversed for recording and erasure. For the helical scan optical tape system of the present invention, the magnetic field required for magneto-optic recording and erasing is preferably furnished by a doughnut-shaped electromagnet 155 positioned outside and adjacent to the tape drum 10, and positioned between the cylindrical outer surface 24 of the tape drum 10 and a focal lens 156 of the optical read write assembly 20, as shown schematically in FIG. 2. The electromagnet 155 must have an optical opening or transparent area 157 through which the laser beam can pass. As such, the magnet can be constructed having an air core, a ferromagnetic core, or a permanent magnet core. Various techniques of fabricating each of the core types in a very thin configuration are well known in the art.

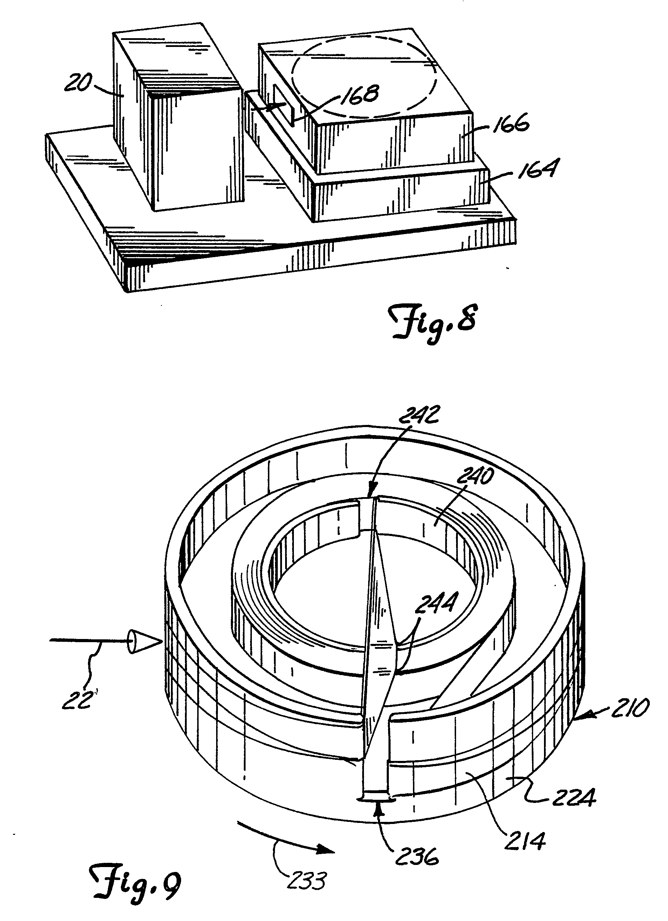

In the embodiment of FIGS. 1-3, a non-rotating protective cover 160 encloses the tape drum assembly 30, as seen in phantom in FIG. 3. The cover 160 has side openings only for the laser beam and photosensor 142 in order to keep the interior of the tape wheel free from debris, dust, and other environmental pollutants. In a preferred embodiment, drum assembly 30 (including the tape 14, drum 10 and the aforementioned tape support and advance means) is in cartridge form. In this arrangement, shown schematically in FIG. 8, the optical read/write assembly 20 is fixed in place relative to a tape drum drive means 164. A tape drum cartridge 166 (bearing the rotatable tape drum with tape helically wound thereon, tape supply means and tape advance means) is operably engagable with the tape drum drive means 164 in order to rotate the tape drum therein and provide electrical connections for the motors and sensors borne by the cartridge 166. The tape, which is helically wrapped about the tape drum inside the cartridge 166, is optically detectable via a suitable opening 168 in the cartridge 166. When such a cartridge 166 is used, or even when the drum assembly 30 is used as in FIG. 3, the drum and tape thereon (and tape therein) are easily removed from the drive means 164 (or drive belt 89, as seen in the FIG. 3 embodiment). By this means, the tape never needs to be threaded onto its tape path and would always be held within an enclosed container. In addition, slight variations in the tape path from drum to drum would be inconsequential because both tape and drum would always be interchanged together. This arrangement thus permits easy interchangeability by different tapes and tape drum assemblies, thus obviating the need for replacing the tape supply and take-up reels when a different tape is to be read or recorded upon.

In a further embodiment of the present invention, the tape supply and take-up reels (plus their associated drive motors and controls) are completely eliminated by employing an endless loop of tape within and about the tape drum. Endless loop tape arrangements are used in certain recording applications, such as flight recorders on aircrafts, where the recording system records data continuously but does not need to store large quantities of data. Old data is automatically erased and replaced with new data each time the tape begins another term in the recorder.

An endless loop drum and tape arrangement for the present invention is schematically illustrated in FIG. 9. A rotatable tape drum 210 has tape 214 wrapped in a near-360 degree helical path about the outer cylinder surface 224 of the tape drum 210. Tape 214 enters and exits the interior of the tape drum 210 via an opening or slot 236 therein, and the tape 214 is advanced about the tape drum 210 in direction indicated by arrow 233 (the drum is also rotated in that direction). A hollow, cylindrically shaped tape core 240 is fixedly mounted within the interior of the tape drum 210, preferably coaxially with the rotational axis of the tape drum 210. The outermost wrap of tape 214 on the core 240 is directed through one side of the opening 236, onto the helical path and around the tape drum 210. After completing its circuit of the helical path, the tape 214 enters the tape drum 210 through the other side of the opening 236. Adjacent the opening 236 and within the tape drum 210, the tape 214 is then twisted (via engagement with guide means not shown) to an approximately 90 degree orientation relative to the tape wound about the core 240, as seen by that portion of the tape at 244. After passing above the core 240 and tape 214 wound thereon, the tape 214 is directed into the interior of the core 240, at which point the tape 214 is again twisted (via suitable guide means not shown) approximately 90 degrees to pass through an opening or slot 242 in the core 240. The tape 214 is then directed around the core 240, immediately becoming the innermost wrap of tape on the core 240, and the tape 214 is aligned to again present the same tape surface outwardly when the tape 214 is directed onto the helical path from the core 240. An optical system using a laser beam 22 as described above scans the tape 214 on its helical path as the tape drum 210 is rotated.

The use of an endless loop tape configuration requires that each wrap or turn of the tape about the core 240 move at a different rotational velocity because the linear velocity of the tape is constant throughout the wrapped pack of tape. In other words, each wrap or turn of the tape must slip against its adjacent wraps or turns of tape. A tape with lubricated surfaces is used to facilitate slippage of adjacent layers of tape within the tape pack wrapped about core 240. In such an endless loop drum assembly configuration, a capstan provides the total moving force for the tape relative to the tape drum. This embodiment of the present invention would be particularly suitable for use in cartridge form, because of its simplicity and because of the lack of necessity for tape handling (i.e., no reel and tape path threading). Tape twisting and handling techniques in endless loop arrangements are well known, as exemplified by U.S. Patent 4,367,850.

Another version of the present invention which is particularly suited for use in cartridge form has a single strip of tape, helically wrapped about a rotatable tape drum from end to end. Because of the high areal density of optical tape ($2 \times 10^8$ bits per square inch), a comparatively short length of tape (one helical wrap around the tape drum) is able to store large quantities of data. In such an application, the diagonal tracks across the reactive surface of the tape would necessarily vary in length, and since the tape does not move relative to the tape drum, reading all of the tracks would require movement of the laser beam relative to the tape from edge to edge (or the use of multiple beams for reading different tracks).

Although the present invention has been described with reference to preferred embodiments, workers skilled in the art will recognize that changes may be made in form and detail without departing from the scope of the invention.

## Claims

1. A method for retrieving information from an optical tape which comprises the steps of:
aligning the optical tape in a helical path about an axis;
rotating the optical tape about the axis; and
directing a beam of radiant energy at a side of the optical tape opposite the axis to detect information on the tape as the optical tape is rotated.

2. The method of claim 1, and further comprising the step of:
advancing the optical tape along the helical path as the optical tape is rotated.

3. The method of claims 1 or 2, and further comprising the step of:
recording information on the tape by directing a beam of radiant energy at that side of the optical tape opposite the axis as the optical tape is rotated.

4. The method of any of claims 1 to 3, and further comprising the step of:
supplying optical tape to the helical path from an optical tape supply within the helical path.

5. The method of any of claims 1 to 4 wherein the optical tape is magneto-optic tape and the beam of radiant energy is a laser beam, and further comprising the step of:
creating a magnetic field congruent to that area of the optical tape upon which the laser beam is focused.

6. The method of any of claims 1-5, and further comprising the steps of:
extending the helical path in an arc less less than 360 degrees about the axis thereby creating a break in the optical tape and information thereon presented to the beam of radiant energy during each rotation of the optical tape about the axis; and
accommodating the information break presented to the beam of radiant energy during each revolution and generating a relatively constant and uninterrupted stream of output signals based on the information retrieved.

7. The method of any of claims 1 to 6, and further comprising the step of:
determining the rotational position of the optical tape relative to the beam of radiant energy.

8. For use in practicing the method of any of claims 1 to 7, an optical tape reading apparatus which comprises:
a drum with the optical tape wound on a helical path on the outside of the drum;
means for optically retrieving information from the optical tape wound on the helical path on the outside of the drum, including at least one beam of radiant energy focused on the optical tape; and
means for rotating the drum and optical tape wound thereon relative to the information retrieving means.

9. The optical tape reading apparatus of claim 8 and further comprising:
means for supplying optical tape from inside the drum to be wound on the helical path on the outside of the drum; and
means for advancing the optical tape along the helical path, wherein the drum. optical tape supply means and optical tape advance means comprise a tape drum assembly which as a unit is selectively disengagable from the rotating means.

10. The optical tape reading apparatus of claims 8 or 9 wherein the retrieving means has a plurality of beams of radiant energy focused on the optical tape, with the beams being radially spaced apart around the cylindrical outer surface of the drum.

Fig. 1

EP 0 323 167 A2

Fig. 2

Fig. 4

Fig. 3

Fig. 5

Fig. 7

Fig. 6

EP 0 323 167 A2

*Fig.8*

*Fig.9*